# EUROPÄISCHE PATENTANMELDUNG

(11) **EP 2 815 828 A1**
(43) Veröffentlichungstag der Anmeldung: **24.12.2014**
(21) Anmeldenummer: 14165386.5
(22) Anmeldetag: 22.04.2014
(51) Int. Cl.: B23B 31/12

(54) **Bohrvorrichtung**

(30) Priorität: 21.06.2013 DE 102013106520
(71) Anmelder: Röhm GmbH, 89567 Sontheim (DE)
(72) Erfinder: Schenk, Peter, 89168 Niederstotzingen (DE)
(74) Vertreter: Hentrich, Swen

(57) **Zusammenfassung**

Die Erfindung betrifft eine Bohrvorrichtung, bestehend aus einer ein Maschinengehäuse (12) und einen Antrieb (4) aufweisenden Bohrmaschine (5), in der eine drehbar gelagerte Maschinenschaft (13) angeordnet ist, und aus einem Bohrfutter (2) zum Koppeln an den Antrieb (4), mit einem drehfest mit dem Maschinenschaft (13) gekoppelten Futterkörper (7), in dem mittels einer Gewindeverbindung (8) zwischen einer drehfest mit einem Antriebsbolzen (3) verbundenen Gewindebuchse (9) und einem Mitnehmer (10) verstellbare Spannbacken (11) geführt sind, sowie mit einer zwischen einer Bohrkonfiguration und einer die Verstellung der Spannbacken (11) ermöglichenden Spannkonfiguration verstellbaren Stellhülse (14). An dem Antriebsbolzen (3) und dem Antrieb (4) sind korrespondierende Kontaktflächen (6) zur Bildung eines unmittelbar wirkenden Formschlusses ausgebildet. Die Stellhülse (14) ist räumlich getrennt von dem Antrieb (4) in einer axial in Richtung Bohrfutter (2) versetzten Weise angeordnet. Die Stellhülse (14) ist permanent drehfest und axial verschiebbar mit dem Maschinenschaft (13) verbunden.

## Beschreibung

Die Erfindung betrifft eine Bohrvorrichtung, bestehend aus einer ein Maschinengehäuse und einen Antrieb aufweisenden Bohrmaschine, in der ein drehbar gelagerter Maschinenschaft angeordnet ist, und aus einem Bohrfutter zum Koppeln an den Antrieb, mit einem drehfest mit dem Maschinenschaft gekoppelten Futterkörper, in dem mittels einer Gewindeverbindung zwischen einer drehfest mit einem Antriebsbolzen verbundenen Gewindebuchse und einem Mitnehmer verstellbare Spannbacken geführt sind, sowie mit einer zwischen einer Bohrkonfiguration und einer die Spannbacken verstellenden Spannkonfiguration verstellbaren Stellhülse.

Derartige Bohrvorrichtungen sind beispielsweise aus der DE 10 2011 002 331 A1 bekannt und haben den Zweck, durch einen einfachen Handgriff die Bohrvorrichtung zwischen einer Spannkonfiguration, in der eine die Spannbacken verstellende Relativdrehung zwischen dem Antriebsbolzen und dem Maschinenschaft möglich ist, und einer Bohrkonfiguration zu schalten, in der der Maschinenschaft mit dem Antriebsbolzen drehfest gekoppelt ist. Bei der DE 10 2011 002 331 A1 ist hierzu eine als Stellhülse dienende Antriebshülse vorgesehen, die stets drehfest mit dem Antriebsbolzen verbunden ist und selektiv mit der Bohrspindel gekoppelt werden kann, um die Bohrvorrichtung zwischen der Spannkonfiguration und der Bohrkonfiguration zu schalten. Bei der Bohrvorrichtung nach der DE 10 2011 002 331 A1 ist die Antriebshülse in den Antrieb der Bohrmaschine - nämlich in deren Getriebe - integriert. Somit muss zur axialen Verstellung der Antriebshülse zwischen der Bohrkonfiguration und der Spannkonfiguration über das Hohlrad das komplette Planetengetriebe des Antriebes axial verstellt werden, um den Antriebsbolzen über die Antriebshülse mit der Bohrspindel koppeln zu können. Obwohl sich die in der DE 10 2011 002 331 A1 gezeigte Bohrvorrichtung bewährt hat, birgt dies selbstredend den Nachteil, dass hiermit ein äußerst tiefgreifender Eingriff in die bohrmaschinenseitigen Teile der Bohrvorrichtung erforderlich ist, wodurch Modifikationen erforderlich werden, die insbesondere ein Nachrüsten an beliebigen Bohrmaschinen erschweren und dieses nur mit einem hohen Aufwand realisiert werden kann.

Der vorliegenden Erfindung liegt daher die Aufgabe zugrunde, die oben genannten Nachteile zu reduzieren und eine Bohrvorrichtung bereitzustellen, die einen kompakten Aufbau zeigt und mit einem möglichst geringen Adaptionsaufwand mit unterschiedlichen Bohrmaschinen verwendet werden kann.

Diese Aufgabe wird nach der Erfindung bei einer Bohrvorrichtung der eingangs genannten Art dadurch gelöst, dass an dem Antriebsbolzen und dem Antrieb korrespondierende Kontaktflächen zur Bildung eines unmittelbar wirkenden Formschlusses ausgebildet sind, dass die Stellhülse räumlich getrennt von dem Antrieb in einer axial in Richtung Bohrfutter versetzten Weise angeordnet ist, und dass die Stellhülse permanent drehfest und axial verschiebbar mit dem Maschinenschaft verbunden ist.

Durch die Zuordnung der Stellhülse an den Maschinenschaft und die durch die axiale Staffelung erzielte räumliche und funktionelle Trennung von Antrieb und Stellhülse wird erreicht, dass die Stellhülse ausschließlich zur Verstellung der Bohrvorrichtung zwischen der Spannkonfiguration und der Bohrkonfiguration dient. Damit wird insbesondere auch erreicht, dass zur Schaltung der Bohrvorrichtung zwischen der Bohrkonfiguration und der Spannkonfiguration antriebsseitig kein Eingriff erfolgen muss. Durch die korrespondierenden Kontaktflächen, die an dem Antrieb, dessen Laufrichtung vorteilhafterweise umgeschaltet werden kann, und an dem Antriebsbolzen ausgebildet sind, kann die Bohrvorrichtung auch unter Einbeziehung einer Standard-Bohrmaschine verwendet werden, da der Antriebsbolzen auf konventionelle Art und Weise an die Bohrmaschine angeschlossen werden kann, ohne zuvor einen großen Adaptionsaufwand betreiben zu müssen. Bei der Koppelung kommen insbesondere unrunde Kontaktflächen wie beispielsweise Mehrkantflächen in Betracht.

Besonders vorteilhaft hat es sich erwiesen, wenn die dem Antrieb zugeordnete Kontaktfläche an einem Planetenträger eines dem Antrieb zugeordneten Planetengetriebes ausgebildet ist. Dies hat einen positiven Einfluss auf den Montageaufwand, da insbesondere bei Bohrmaschinen, die ein Getriebe aufweisen, der Planetenträger ausreichend Platz aufweist, um die Kontaktfläche darauf auszubilden. Zudem ist der Planetenträger auch leicht zugänglich, was ebenfalls die Montage erleichtert.

Günstig ist es zudem, wenn die Stellhülse in der Bohrkonfiguration drehfest mit dem Antriebsbolzen gekoppelt ist. Durch die Koppelung des Antriebsbolzens mit der Stellhülse in der Bohrkonfiguration ist gewährleistet, dass sich der Maschinenschaft, der ebenfalls drehfest mit der Stellhülse verbunden ist, durch den Antriebsbolzen angetrieben wird. Somit ist eine Relativdrehung zwischen dem Maschinenschaft und dem Antriebsbolzen ausgeschlossen, die ein unbeabsichtigtes Lösen der Spannbacken zur Folge haben könnte. Im Rahmen der Erfindung ist es jedoch auch vorgesehen, dass die Stellhülse nicht im Eingriff mit dem Antriebsbolzen gebracht wird. In diesem Falle erfolgt der Kraftfluss bei gespannten Spannbacken von dem Antriebsbolzen über die Gewindebuchse weiter auf die gespannten Spannbacken, von dort auf den Futterkörper und schlussendlich auf den Maschinenschaft, der somit von der Drehung des Antriebsbolzens lediglich mitgenommen wird. Somit wäre auch hierbei eine Relativdrehung zwischen dem Antriebsbolzen und dem Maschinenschaft unterbunden.

Vorteilhaft hat es sich auch gezeigt, wenn dem Antriebsbolzen außenumfangsseitig eine Sperrverzahnung zugeordnet ist zur Bildung eines Formschlusses mit einer der Stellhülse innenumfangsseitig zugeordneten Verzahnung in der Bohrkonfiguration. Da eine derartige Sperrverzahnung einfach hergestellt werden kann, wirkt sich dies positiv auf die Herstellungskosten des Antriebsbolzens und damit auf die Herstellungskosten des gesamten erfindungsgemäßen Bohrfutters aus. Im Rahmen der Erfindung kann es jedoch auch vorgesehen sein, dass die Sperrverzahnung als separates Bauteil bei der Montage der Bohrvorrichtung von der dem Antrieb zuweisenden Seite her auf den Antriebsbolzen gepresst wird.

Für die Funktionssicherheit des erfindungsgemäßen Bohrfutters hat es sich auch als günstig gezeigt, wenn ein elastisches Element zur Überführung der Stellhülse aus der Spannkonfiguration in die Bohrkonfiguration vorgesehen ist. Hierdurch wird insbesondere eine unbeabsichtigte Verstellung der Spannbacken unterbunden, da die Verstellung der Stellhülse aus der Spannkonfiguration in die Bohrkonfiguration stets durch das elastische Element unterstützt wird. Wenn der Antriebsbolzen eine Sperrverzahnung aufweist, dann bietet das elastische Element zudem den entscheidenden Vorteil, dass bei der Verstellung der Stellhülse aus der Spannkonfiguration in die Bohrkonfiguration im Falle einer Nichtüberlappung der Sperrverzahnung des Antriebsbolzens und der Verzahnung, die der Stellhülse zugeordnet ist, beim Anlaufen des Antriebsbolzens die Stellhülse durch das gespannte elastische Element selbsttätigend axial verstellt wird und somit der Maschinenschaft mit dem Antriebsbolzen drehfest verbindet.

Besonders vorteilhaft ist es zudem, wenn die Gewindebuchse integral mit dem Antriebsbolzen gebildet ist. Dadurch wird auf effektive Art und Weise die Kopfiastigkeit der erfindungsgemäßen Bohrvorrichtung reduziert und zudem eine äußerst kompakte Bohrvorrichtung realisiert.

Weiterhin hat es sich als günstig gezeigt, wenn die Stellhülse in der Spannkonfiguration drehfest mit dem Maschinengehäuse koppelbar ist. Damit kann der drehfest mit der Stellhülse verbundene Maschinenschaft in der Spannkonfiguration drehfest mit dem Maschinengehäuse gekoppelt werden, wodurch bei der Betätigung des Antriebes eine Relativdrehung zwischen dem Antriebsbolzen und dem Maschinenschaft erfolgt, die zu einer Verstellung der Spannbacken führt. Im Rahmen der Erfindung ist es jedoch auch vorgesehen, dass die Stellhülse an anderen Bauteilen festgelegt ist, um eine Relativdrehung zwischen dem Antriebsbolzen und dem Maschinenschaft zu erreichen weiteren, insbesondere ist es hierbei auch vorgesehen, dass der Maschinenschaft in der Spannkonfiguration ebenfalls drehbar gegenüber dem Maschinengehäuse ausgeführt ist, wobei sich in diesem Fall die Drehgeschwindigkeit des Maschinenschaftes von der des Antriebsbolzens unterscheidet.

In diesem Zusammenhang hat es sich als besonders günstig erwiesen, wenn in der Spannkonfiguration zwischen der Stellhülse und dem Maschinengehäuse eine Rutschkupplung vorgesehen ist. Durch die Rutschkupplung lässt sich auf einfache und effektive Art und Weise das Spann- bzw. Lösemoment der Spannbacken begrenzen. Dadurch werden insbesondere zu hohe Spannkräfte vermieden, die zu einer Zerstörung des zu spannenden Werkzeuges führen würden. Weiterhin wird damit auch effektiv verhindert, dass die Spannbacken beim Zurückfahren in dem Futterkörper festgesetzt werden, wodurch unter Umständen ein Spannen nicht mehr möglich wäre und damit die Bohrvorrichtung unbrauchbar wäre. In diesem Zusammenhang hat es sich auch als besonders vorteilhaft erwiesen, wenn die Rutschkupplung durch eine radial wirkende Kupplungshülse gebildet ist, die außenumfangsseitig mindestens einen Rastsitz zur Aufnahme eines radial nach außen gegen die Kraft eines Rückstellelements verstellbaren Rastgliedes aufweist. Durch die Rastglieder, die im Rahmen der Erfindung bevorzugt als zylindrische Kupplungsrollen gebildet sind, lässt sich die Rutschkupplung einfach und kostengünstig herstellen, wobei es sich auch bewährt hat, wenn die Anzahl der Rastglieder zur Zahl der Rastsitze korrespondiert.

Im Rahmen der Erfindung hat es sich auch vorteilhaft gezeigt, wenn das Rückstellelement durch einen Federsteg gebildet ist. Dieser Federsteg, der beispielsweise aus Federstahl gebildet sein kann, kann dabei eine Nut zur Aufnahme des Rastgliedes aufweisen. Durch eine geeignete Materialwahl kann insbesondere die Langlebigkeit und die elastische Deformierbarkeit der Rutschkupplung gewährleistet werden. In diesem Zusammenhang hat es sich auch bewährt, wenn zur Erhöhung des Kupplungsmomentes die von dem Rastglied wegweisende Fläche des Federsteges durch Vulkanisat verstärkt ist. Durch das Vulkanisat, das vorteilhafterweise aus Kautschuk gebildet ist jedoch auch andere Polymere umfasst, lässt sich auf einfache und kostengünstige Art und Weise das Kupplungsmoment der radialen Rutschkupplung erhöhen.

Besonders günstig hat es sich zudem gezeigt, wenn der Kupplungshülse innenumfangsseitig eine Kupplungsverzahnung zugeordnet ist zur drehfesten Kupplung mit einer der Stellhülse außenumfangsseitig zugeordneten Außenverzahnung. Somit kann die Kupplungshülse auf einfache und effektive Art und Weise mit der Rutschkupplung gekoppelt werden. Im Rahmen der Erfindung ist es jedoch auch vorgesehen, dass die Stellhülse und die Kupplungshülse durch eine andere Art des Formschlusses miteinander verbunden sind. Vorteilhaft ist es auch, wenn die Stellhülse durch einen mit einer vorzugsweise dem Maschinengehäuse zugeordneten Steuerhülse gekoppelten Steuerdraht axial verstellbar ist. Somit kann auf einfache und effektive Art und Weise durch eine Verstellung der Steuerhülse die Stellhülse axial zwischen der Bohrkonfiguration und der Spannkonfiguration verstellt werden. Im Rahmen der Erfindung ist hierbei sowohl eine Verstellung der Steuerhülse in radialer Richtung - also eine Verdrehung - als auch in axialer Richtung oder eine Kombination der vorgenannten Verstellung vorgesehen.

Einen positiven Einfluss auf den Einsatzbereich des erfindungsgemäßen Bohrfutters hat es zudem auch, wenn der Maschinenschaft und der Antriebsbolzen federbeaufschlagt sind. Hierdurch lässt sich das erfindungsgemäße Bohrfutter auch zum Schlagbohren verwenden.

Im Folgenden wird die Erfindung an in den Zeichnungen dargestellten Ausführungsbeispielen näher erläutert; es zeigen:
- Fig. 1: eine Schnittansicht einer ersten Ausführungsform der erfindungsgemäßen Bohrvorrichtung in der Spannkonfiguration,
- Fig. 2: den Schnitt II-II aus Figur 2,

- Fig. 3: eine Schnittansicht der Ausführungsform nach Figur 1 in der Bohrkonfiguration,
- Fig. 4: eine Schnittansicht einer zweiten Ausführungsform der erfindungsgemäßen Bohrvorrichtung in der Spannkonfiguration,
- Fig. 5: eine Schnittansicht der Ausführungsform nach Figur 4 in der Bohrkonfiguration, und
- Fig. 6: eine Schnittansicht einer dritten Ausführungsform der erfindungsgemäßen Bohrvorrichtung in der Bohrkonfiguration.

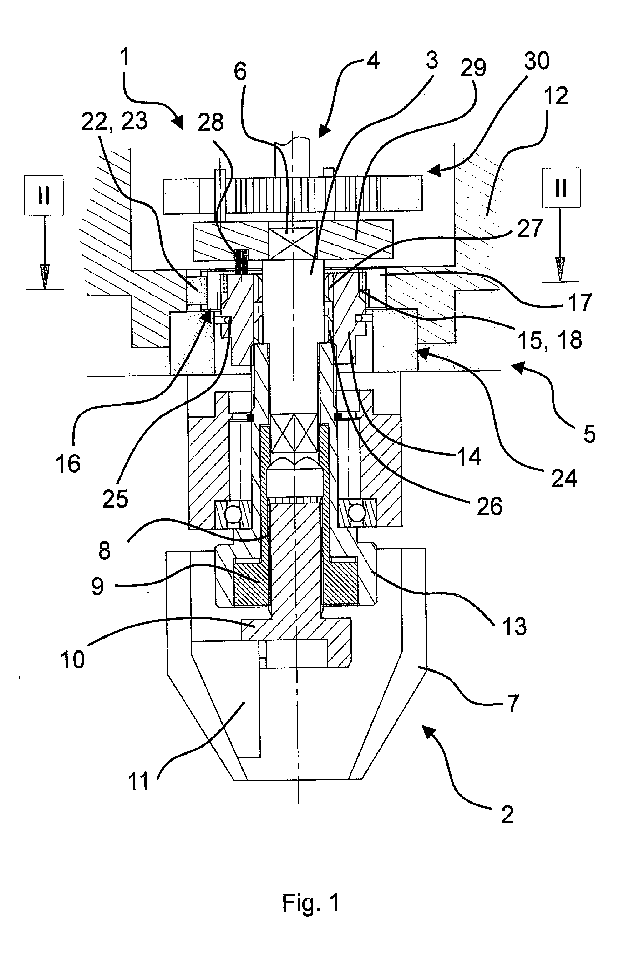

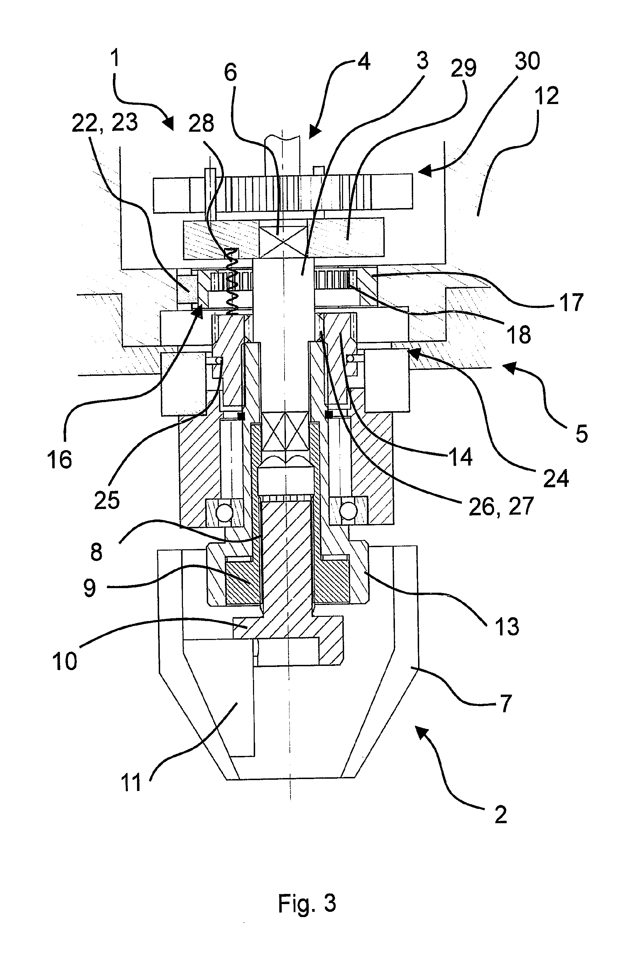

Figur 1 zeigt in einer geschnittenen Ansicht eine erste Ausführungsform einer erfindungsgemäßen Bohrvorrichtung 1 in der Spannkonfiguration mit einem Bohrfutter 2, das über einen Antriebsbolzen 3 mit einem Antrieb 4 einer Bohrmaschine 5 gekoppelt ist. Hierzu weisen der Antriebsbolzen 3 und der Antrieb 4 korrespondiere Kontaktflächen 6 auf, um einen unmittelbar wirkenden Formschluss zu bilden. Das Bohrfutter 2 weist einen Futterkörper 7 auf, in dem mittels einer Gewindeverbindung 8 zwischen einer Gewindebuchse 9 und einem Mitnehmer 10 verstellbare Spannbacken 11 gelagert sind. Die Gewindebuchse 9 ist dabei drehfest mit dem Antriebsbolzen 3 verbunden. Weiterhin ist ein in einem Maschinengehäuse 12 der Bohrmaschine 5 drehbar gelagerter und mit dem Futterkörper 7 drehfest verbundener Maschinenschaft 13 vorgesehen, der mit einer zwischen der Spannkonfiguration, die in der Figur 1 dargestellt ist, und der in der Figur 3 dargestellten Bohrkonfiguration verstellbaren Stellhülse 14 permanent drehfest verbunden ist, wobei die Stellhülse 14 räumlich getrennt von dem Antrieb 4 in einer axial in Richtung Bohrfutter 2 versetzten Weise angeordnet ist und entlang dem Maschinenschaft 13 axial verstellt werden kann. In der Spannkonfiguration ist die Stellhülse 14 axial in Richtung des Antriebes 4 verstellt und über eine Außenverzahnung 15 kraftschlüssig drehfest an einer dem Maschinengehäuse 12 zugeordneten radial wirkenden Rutschkupplung 16 verbunden. Die Rutschkupplung 16 steht über eine innenumfangsseitig an einer Kupplungshülse 17 ausgebildeten Kupptungsverzahnung 18 mit der der Stellhülse 14 außenumfangsseitig zugeordneten Außenverzahnung 15 im Eingriff. Die Kupplungshülse 17 weist außenumfangsseitig mehrere Rastsitze 19 zur Aufnahme jeweils eines radial gegen die Kraft eines als ein Federsteg 20 gebildetes Rückstellelement 21 verstellbaren Rastgliedes 22 auf. Die Rastglieder 22 sind in dem gezeigten Ausführungsbeispiel als zylindrische Kupplungsrollen 23 gebildet. Zur Verstellung der Stellhülse 14 zwischen der Spannkonfiguration und der Bohrkonfiguration ist auf bekannte Weise eine dem Maschinengehäuse 12 zugeordnete Steuerhülse 24 vorgesehen, die mit der Stellhülse 14 durch einen Steuerdraht 25 gekoppelt ist, um diese axial zu verstellen. Wird nun in der Spannkonfiguration der Antrieb 4 betätigt, so kommt es zu einer Relativdrehung zwischen dem Antriebsbolzen 3 und dem Maschinenschaft 13, der durch die Rutschkupplung 16 mit dem Maschinengehäuse 12 drehfest verbunden ist. Über den mit dem Maschinenschaft 13 drehfest verbundenen Futterkörper 7, in dem die Spannbacken 11 geführt sind, kommt es somit auch zu einer Relativdrehung zwischen dem Mitnehmer 10 und der mit dem Antriebsbolzen 3 drehfest verbundenen Gewindebuchse 9, wodurch der Mitnehmer 10 axial gespindelt wird und sich die in dem Futterkörper 7 geführten Spannbacken 11 ebenfalls axial und zusätzlich radial verstellen. Kommen die Spannbacken 11 beim Spannen zur Anlage an ein zu spannendes in der Zeichnung nicht dargestelltes Werkzeug, so löst bei einer Überschreitung des durch die Rutschkupplung 16 vorgegebenen Spannmomentes die Rutschkupplung 16 aus. Die Kupplungsrollen 23 werden aus den Raststitzen 19 radial nach außen gegen die Federstege 20 verstellt und geben die Kupplungshülse 17 frei. Über die Kupplungshülse 17 und die damit verbundene Stellhülse 14 wird auch der Maschinenschaft 13 verdreht. Damit wird ein weitergehendes Spannen der Spannbacken 11 nach erreichtem maximalem Spannmoment unterbunden. Bei einer Veränderung der Laufrichtung des Antriebes 4 - also beim Öffnen der Spannbacken - kommt es ebenfalls nach Erreichen des durch die Rutschkupplung 16 vorgegebenen Lösemomentes - wie oben beschrieben - zum Auslösen der Rutschkupplung 16. Über die Kupplungshülse 17 und die damit verbundene Stellhülse 14 wird dabei auch der Maschinenschaft 13 verdreht. Ein weitergehendes Verstellen der Spannbacken 11 erfolgt somit nach erreichtem maximalem Lösemoment nicht mehr.

An dem Antriebsbolzen 3 ist eine Sperrverzahnung 26 ausgebildet, die zur drehfesten Koppelung des Antriebsbolzens 3 mit einer der Stellhülse 14 zugeordneten Verzahnung 27 dient, um in der Bohrkonfiguration eine Relativdrehung zwischen dem Maschinenschaft 13 und dem Antriebsbolzen 3 zu verhindern. In der Spannkonfiguration ist die Stellhülse 14 durch ein elastisches Element 28 beaufschlagt, dass in dem gezeigten Ausführungsbeispiel an einem Planetenträger 29 eines dem Antrieb 4 zugeordneten Planetengetriebes 30 abgestützt ist und dazu führt, dass in der Spannkonfiguration auf die Stellhülse 14 stets eine Kraft wirkt, die die Stellhülse 14 axial aus der Spannkonfiguration in die Bohrkonfiguration überführt. Dies ist insbesondere dann von Vorteil, wenn bei einer manuellen Betätigung der Stellhülse 14 die außenumfangsseitig an dem Antriebsbolzen 3 ausgebildete Sperrverzahnung 26 nicht fluchtend mit der Verzahnung 27 der Stellhülse 14 orientiert ist. Beim Anlaufen des Antriebes 4 rutscht die Stellhülse 14 durch das elastische Element 28 in die Sperrverzahnung 26 des Antriebsbolzens 3 und koppelt damit den Antriebsbolzen 3 drehfest mit dem Maschinenschaft 13.

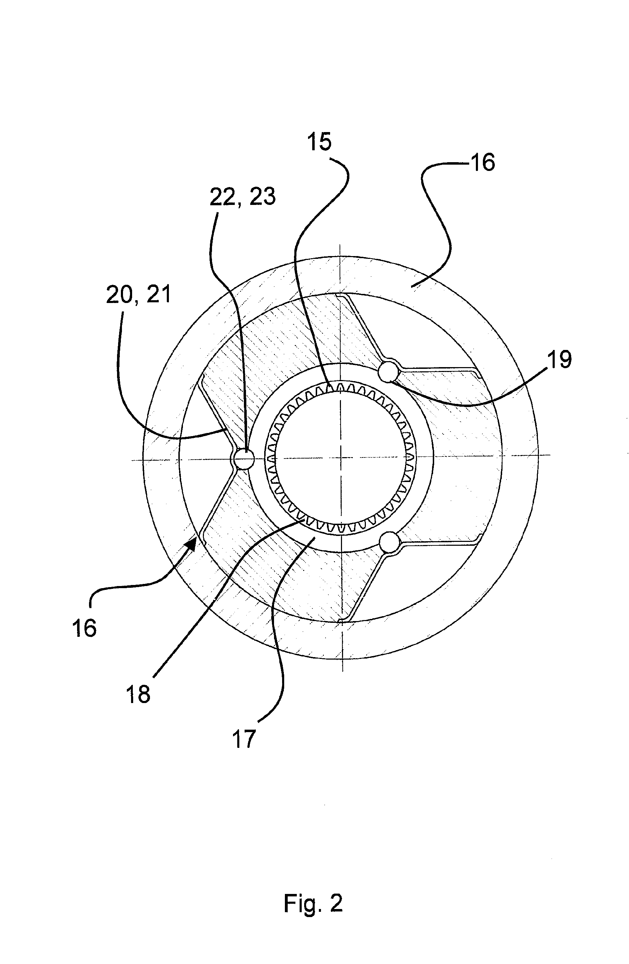

Figur 2 zeigt eine Schnittansicht entlang des Schnittes II-II aus der Figur 1 und verdeutlicht insbesondere den Aufbau der an dem Maschinengehäuse 12 angebrachten Rutschkupplung 16. Insbesondere wird die Form der die Rückstellelemente 21 bildenden Federstege 20 deutlich, wobei in dem gezeigten Ausführungsbeispiel zur Erhöhung des Kupplungsmomentes die von dem Rastglied 22 wegweisende Fläche der Federstege 20 durch Vulkanisat verstärkt sind. Auch ist die der Kupplungshülse 17 zugeordnete Kupplungsverzahnung 18 ersichtlich, die zur drehfesten Kupplung mit der der Stellhülse 14 außenumfangsseitig zugeordneten Außenverzahnung 15 vorgesehen ist. Wird nun beim Spannen der Spannbacken 11 das durch die Kraft der Rückstellelemente 21 vorgegebenen Löse- oder Spannmoment überschritten, so werden die Rastglieder 22 radial gegen die Kraft der Rückstellelemente 21 nach außen verstellt, wodurch die im Eingriff mit der Stellhülse 14 stehende Kupplungshülse 17 frei rotieren kann. Hierdurch kommt es insbesondere auch zu einem akustischen Ratschen, das dem Benutzer der erfindungsgemäßen Bohrvorrichtung 1 verdeutlicht, dass der Spann- oder Lösevorgang der Spannbacken 11 abgeschlossen ist.

In der in der Figur 3 dargestellten Bohrkonfiguration der ersten Ausführungsform ist die Stellhülse 14 axial in Richtung der Spannbacken 11 verstellt und greift mit der Verzahnung 27 in die Sperrverzahnung 26 ein, die dem Antriebsbolzen 3 außenumfangsseitig zugeordnet ist. Somit ist in der Bohrkonfiguration der Maschinenschaft 13 mit dem Antriebsbolzen 3 über die Stellhülse 14 drehfest verbunden. Wird nun der Antriebsbolzen 3 durch den Antrieb 4 angetrieben, die über die an dem Antriebsbolzen 3 und dem Planetenträger 29 des dem Antrieb 4 zugeordneten Planetengetriebes 30 ausgebildeten korrespondierenden Kontaktflächen 6 unmittelbar formschlüssig miteinander verbunden sind, so wird der Maschinenschaft 13 ebenfalls angetrieben. Hierdurch entsteht keine Relativdrehung zwischen dem Maschinenschaft 13 und dem Antriebsbolzen 3, wodurch eine Verstellung der Spannbacken 11 ausgeschlossen ist.

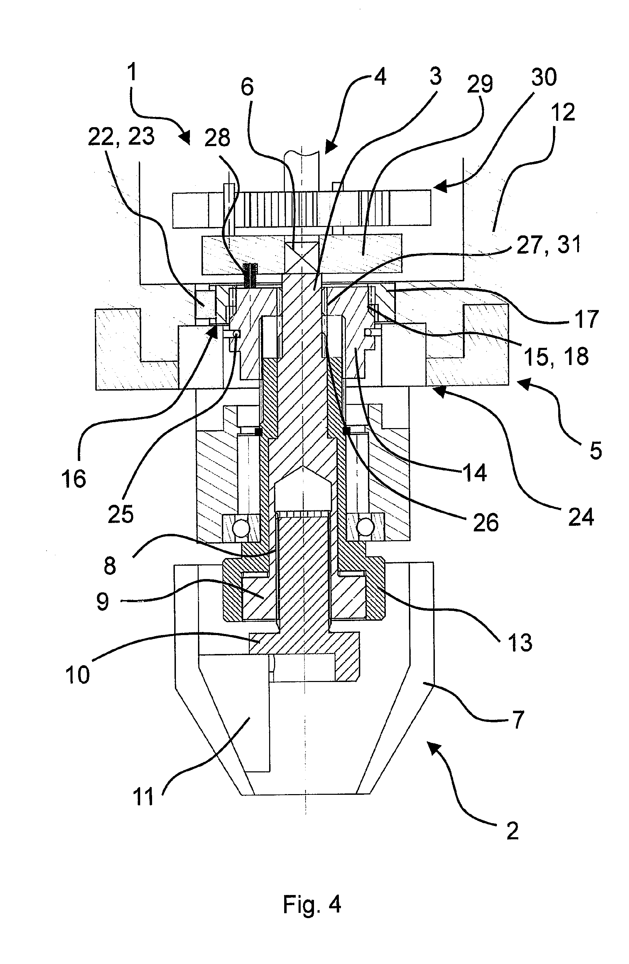

Figur 4 zeigt eine weitere Ausführungsform der erfindungsgemäßen Bohrvorrichtung 11 in der Spannkonfiguration. In dem hier gezeigten Ausführungsbeispiel ist der Antriebsbolzen 3 einstückig mit der Gewindebuchse 9 gebildet. Um dabei die Montage des Antriebsbolzens 3 mit dem Maschinenschaft 13 zu ermöglichen, ist der Außendurchmesser der an dem Antriebsbolzen 3 ausgebildeten Sperrverzahnung 26 kleiner als der Innendurchmesser dem Maschinenschaft 13. Um in der Spannstellung dennoch eine drehfeste Koppelung des Antriebsbolzens 3 mit der Stellhülse 14 zu ermöglichen, ist der Stellhülse 14 ein die Verzahnung 27 tragender Kragen 31 zugeordnet. Der die Gewindebuchse 9 beinhaltende Antriebsbolzen 3 kann also einfach von der dem Antrieb 4 wegweisenden Seiter her in dem Maschinenschaft 13 montiert werden. Auch bei der in der Figur 4 gezeigten Ausführungsform wird die Stellhülse 14 in der Spannstellung über die radial wirkende Rutschkupplung 16 kraftschlüssig mit dem Maschinengehäuse 12 verbunden.

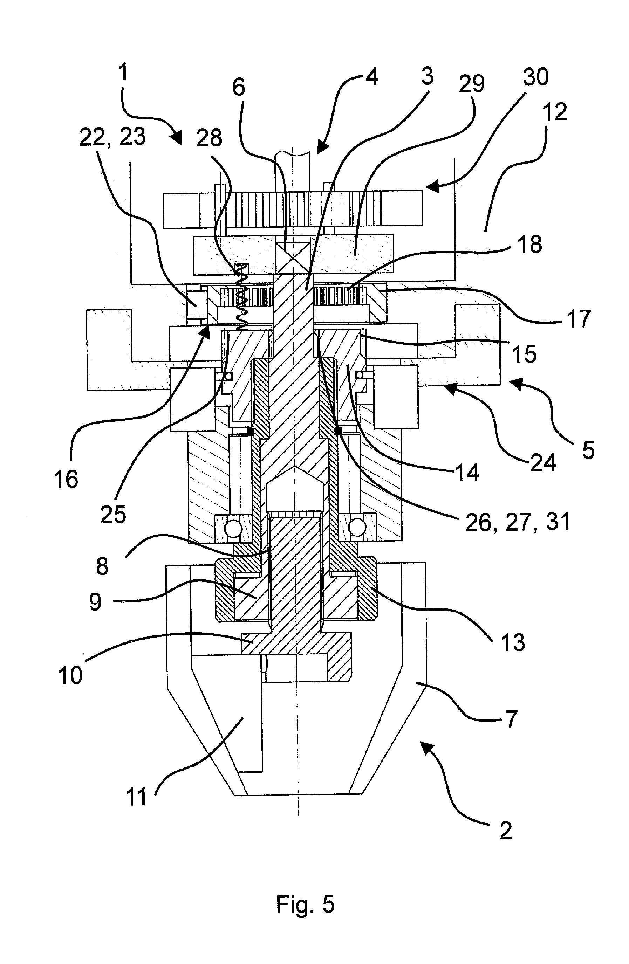

Figur 5 zeigt die Ausführungsform der Figur 4 in der Bohrkonfiguration. Hierbei befindet sich die Stellhülse 14 über die an dem Kragen 31 ausgebildete Verzahnung 27 im Eingriff mit der Sperrverzahnung 26, die an dem Antriebsbolzen 3 ausgebildet ist. Damit ist der Antriebsbolzen 3 drehfest mit dem Maschinenschaft 13 verbunden, wodurch ein versehentliches Verstellen der Spannbacken 11 ausgeschlossen ist.

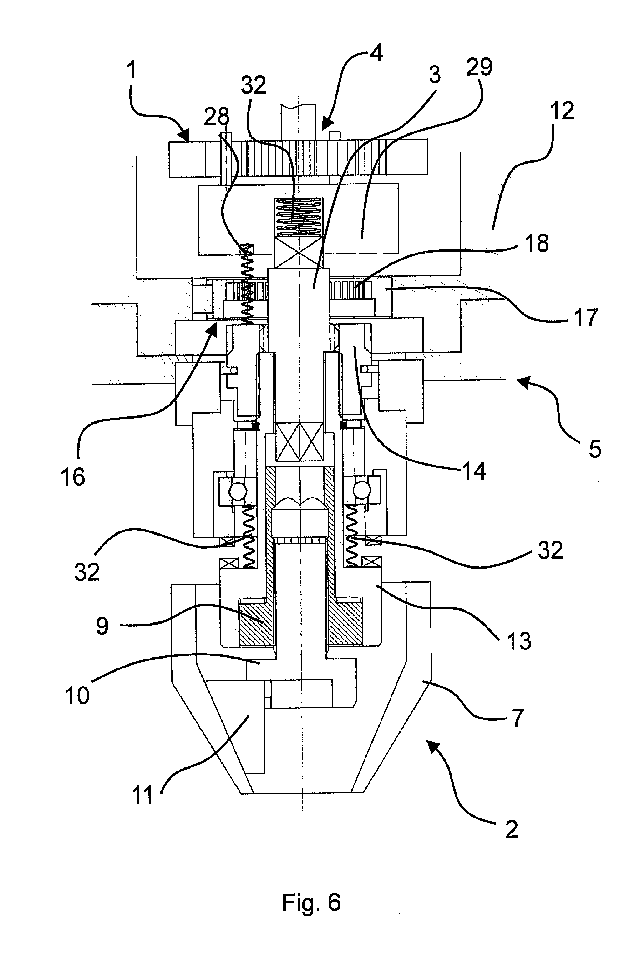

Figur 6 zeigt eine weitere zum Schlagbohren geeignete Ausführungsform der erfindungsgemäßen Bohrvorrichtung in der Bohrstellung. Hierin sind der Maschinenschaft 13 und der Antriebsbolzen 3 durch Federn 32 beaufschlagt. Damit kann im Schlagbohrbetreib ein durch den Antrieb 4 der Bohrvorrichtung 1 induzierter Schlagimpuls in bekannter Weise auf ein zwischen den Spannbacken 11 gespanntes das Bohrwerkzeug übertragen werden.

Im Folgenden wird die Funktionsweise der erfindungsgemäßen Bohrvorrichtung 1 noch einmal erläutert. In der Spannkonfiguration, die in den Figuren 1 und 4 dargestellt ist, ist die Stellhülse 14 über die radial wirkende Rutschkupplung 16 mit dem Maschinengehäuse 12 verbunden und es kommt bei Betätigung des Antriebes 4 zu einer Relativdrehung zwischen dem Antriebsbolzen 3 und der Stellhülse 14. Durch den aus dem Mitnehmer 10 und der Gewindebuchse 9 gebildeten Spindeltrieb können nun - abhängig von der Drehrichtung des Antriebes 4 - die in dem Futterkörper 7 geführten Spannbacken 11 geöffnet oder geschlossen werden. Wird durch eine Betätigung der Steuerhülse 24 die Stellhülse 14 durch den Steuerdraht 25 axial verstellt und aus dem Eingriff mit der radialen Rutschkupplung 16 gebracht, so kann die Stellhülse 14 nun über den Verzahnungseingriff zwischen der Verzahnung 27 und der Sperrverzahnung 26 im Eingriff mit dem Antriebsbolzen 3 gebracht werden. Die Bohrvorrichtung 1 befindet sich nun in der in den Figuren 3 und 5 dargestellten Bohrkonfiguration. Durch die Kopplung von Maschinenschaft 13 und Antriebsbolzen 3 wird eine Relativdrehung zwischen diesen Bauteilen unterbunden, wodurch ein unbeabsichtigtes Lösen der Spannbacken 11 ausgeschlossen ist.

### Bezugszeichenliste

- 1: Bohrvorrichtung
- 2: Bohrfutter
- 3: Antriebsbolzen
- 4: Antrieb
- 5: Bohrmaschine
- 6: Kontaktfläche
- 7: Futterkörper
- 8: Gewindeverbindung
- 9: Gewindebuchse
- 10: Mitnehmer
- 11: Spannbacken
- 12: Maschinengehäuse
- 13: Maschinenschaft
- 14: Stellhülse
- 15: Außenverzahnung
- 16: Rutschkupplung
- 17: Kupplungshülse
- 18: Kupplungsverzahnung
- 19: Rastsitz
- 20: Federsteg
- 21: Rückstellelement
- 22: Rastglied
- 23: Kupplungsrolle
- 24: Steuerhülse
- 25: Steuerdraht
- 26: Sperrverzahnung
- 27: Verzahnung
- 28: elastisches Element
- 29: Planetenträger
- 30: Planetengetriebe
- 31: Kragen
- 32: Feder

## Patentansprüche

1. Bohrvorrichtung, bestehend aus einer ein Maschinengehäuse (12) und einen Antrieb (4) aufweisenden Bohrmaschine (5), in der ein drehbar gelagerter Maschinenschaft (13) angeordnet ist, und aus einem Bohrfutter (2) zum Koppeln an den Antrieb (4), mit einem drehfest mit dem Maschinenschaft (13) gekoppelten Futterkörper (7), in dem mittels einer Gewindeverbindung (8) zwischen einer drehfest mit einem Antriebsbolzen (3) verbundenen Gewindebuchse (9) und einem Mitnehmer (10) verstellbare Spannbacken (11) geführt sind, sowie mit einer zwischen einer Bohrkonfiguration und einer die Verstellung der Spannbacken (11) ermöglichenden Spannkonfiguration verstellbaren Stellhülse (14), **dadurch gekennzeichnet, dass** an dem Antriebsbolzen (3) und dem Antrieb (4) korrespondierende Kontaktflächen (6) zur Bildung eines unmittelbar wirkenden Formschlusses ausgebildet sind, dass die Stellhülse (14) räumlich getrennt von dem Antrieb (4) in einer axial in Richtung Bohrfutter (2) versetzten Weise angeordnet ist, und dass die Stellhülse (14) permanent drehfest und axial verschiebbar mit dem Maschinenschaft (13) verbunden ist.

2. Bohrvorrichtung nach Anspruch 1, **dadurch gekennzeichnet, dass** die dem Antrieb (4) zugeordnete Kontaktfläche (6) an einem Planetenträger (29) eines dem Antrieb (4) zugeordneten Planetengetriebes (30) ausgebildet ist.

3. Bohrvorrichtung nach Anspruch 1 oder 2, **dadurch gekennzeichnet, dass** die Stellhülse (14) in der Bohrkonfiguration drehfest mit dem Antriebsbolzen (3) gekoppelt ist.

4. Bohrvorrichtung nach Anspruch 3, **dadurch gekennzeichnet, dass** dem Antriebsbolzen (3) außenumfangsseitig eine Sperrverzahnung (26) zugeordnet ist zur Bildung eines Formschlusses in der Bohrkonfiguration mit einer der Stellhülse (14) innenumfangsseitig zugeordneten Verzahnung (27).

5. Bohrvorrichtung nach einem der Ansprüche 1 bis 4, **dadurch gekennzeichnet, dass** ein elastisches Element (28) zur Überführung der Stellhülse (14) aus der Spannkonfiguration in die Bohrkonfiguration vorgesehen ist.

6. Bohrvorrichtung nach einem der Ansprüche 1 bis 5, **dadurch gekennzeichnet, dass** die Gewindebuchse (9) integral mit dem Antriebsbolzen (3) gebildet ist.

7. Bohrvorrichtung nach einem der Ansprüche 1 bis 6, **dadurch gekennzeichnet, dass** die Stellhülse (14) in der Spannkonfiguration drehfest mit dem Maschinengehäuse (12) koppelbar ist.

8. Bohrvorrichtung nach Anspruch 7, **dadurch gekennzeichnet, dass** in der Spannkonfiguration zwischen der Stellhülse (14) und dem Maschinengehäuse (12) eine Rutschkupplung (16) vorgesehen ist.

9. Bohrvorrichtung nach Anspruch 8, **dadurch gekennzeichnet, dass** die Rutschkupplung (16) durch eine radial wirkende Kupplungshülse (17) gebildet ist, die außenumfangsseitig mindestens einen Rastsitz (19) zur Aufnahme eines radial nach außen gegen die Kraft eines Rückstellelements (21) verstellbaren Rastgliedes (22) aufweist.

10. Bohrvorrichtung nach Anspruch 9, **dadurch gekennzeichnet, dass** das Rückstellelement (21) durch einen Federsteg (20) gebildet ist.

11. Bohrvorrichtung nach Anspruch 10, **dadurch gekennzeichnet, dass** zur Erhöhung des Kupplungsmomentes die von dem Rastglied (22) wegweisende Fläche des Federsteges (20) durch ein Vulkanisat verstärkt ist.

12. Bohrvorrichtung nach einem der Ansprüche 9 bis 11, **dadurch gekennzeichnet, dass** der Kupplungshülse (17) innenumfangsseitig eine Kupplungsverzahnung (18) zugeordnet ist zur drehfesten Kupplung mit einer der Stellhülse (14) außenumfangsseitig zugeordneten Außenverzahnung (15).

13. Bohrvorrichtung nach einem der Ansprüche 1 bis 12, **dadurch gekennzeichnet, dass** die Stellhülse (14) durch einen mit einer dem Maschinengehäuse (12) zugeordneten Steuerhülse (24) gekoppelten Steuerdraht (25) axial verstellbar ist.
